(19) Europäisches Patentamt
European Patent Office
Office européen des brevets

(11) Veröffentlichungsnummer: **0 304 751**
**A1**

# (12) EUROPÄISCHE PATENTANMELDUNG

(21) Anmeldenummer: **88113201.3**

(51) Int. Cl.4: **C09B 62/517 , D06P 1/384**

(22) Anmeldetag: **13.08.88**

Patentansprüche für folgenden Vertragsstaat: ES.

(30) Priorität: **21.08.87 DE 3727909**

(43) Veröffentlichungstag der Anmeldung:
**01.03.89 Patentblatt 89/09**

(84) Benannte Vertragsstaaten:
**BE CH DE ES FR GB IT LI**

(71) Anmelder: **HOECHST AKTIENGESELLSCHAFT**
**Postfach 80 03 20**
**D-6230 Frankfurt am Main 80(DE)**

(72) Erfinder: **Springer Hartmut, Dr.**
**Am Erdbeerstein 27**
**D-6240 Königstein/Taunus(DE)**

## (54) Wasserlösliche Phthalocyanin-Verbindungen, Verfahren zu ihrer Herstellung und ihre Verwendung als Farbstoffe.

(57) Phthalocyaninverbindungen mit faserreaktiven Farbstoffeigenschaften, die hydroxy- und/oder carbonamidgruppenhaltiges Material, insbesondere Fasermaterial, wie Cellulosefasern, Wolle und synthetische Polyamidfasern, in echten und kräftigen Tönen färben und die der allgemeinen Formel (1)

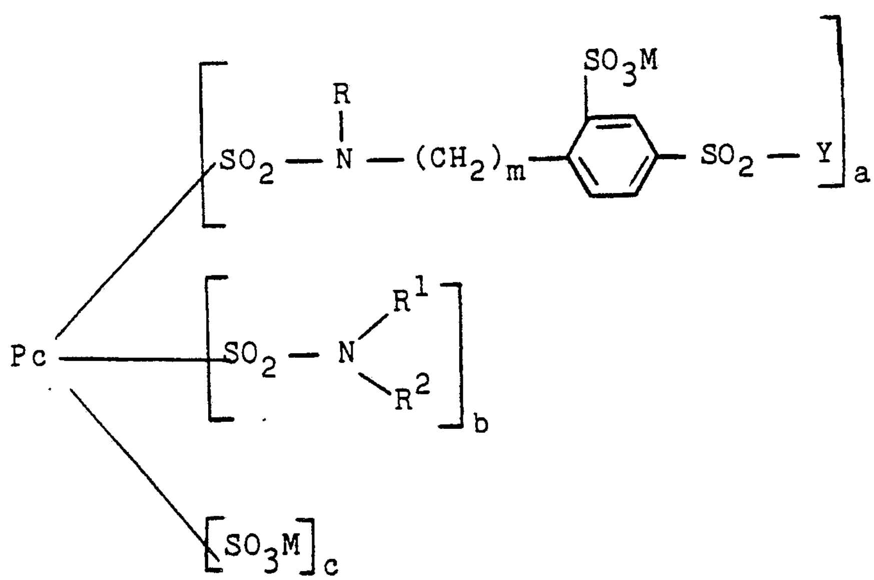

(1)

entsprechen, in welcher bedeuten:

Pc ist der Rest des Kupfer- oder Nickelphthalocyanins, dessen Benzolkerne durch Chlor oder Phenyl substituiert sein können;

R ist ein Wasserstoffatom oder eine Alkylgruppe von 1 bis 4 C-Atomen, die durch eine Hydroxy-, Sulfato-, Cyan- oder Sulfogruppe substituiert sein kann,

M ist ein Wasserstoffatom oder das Äquivalent eines salzbildenden Metalls, bevorzugt ein Wasserstoff-

EP 0 304 751 A1

Xerox Copy Centre

atom oder ein Alkalimetall
; Y ist die Vinylgruppe oder bevorzugt die β-Sulfatoethyl-Gruppe;
$R^1$ ist ein Wasserstoffatom oder eine Alkylgruppe von 1 bis 4 C-Atomen, die substituiert sein kann, und
$R^2$ hat eine der Bedeutungen von $R^1$ und ist zu $R^1$ gleich oder von $R^1$ verschieden, oder
$-NR^1R^2$ bilden zusammen eine Gruppe der Formel (2)

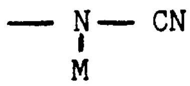
(2)

mit M der obengenannten Bedeutung;
m ist die Zahl 1, 2, 3 oder 4;
a ist eine ganze oder gebrochene Zahl von 1 bis 4,
b ist eine ganze oder gebrochene Zahl von Null bis 3 und
c ist eine ganze oder gebrochene Zahl von Null bis 3,
mit der Maßgabe, daß die Summe von (a + b + c) eine ganze oder gebrochene Zahl von 2 bis 4 ist,
die Sulfonamid- und Sulfogruppen sind an die carbocyclischen aromatischen Ringe des Phthalocyanins jeweils in 3- und/oder 4-Stellung gebunden.

# Wasserlösliche Phthalocyaninverbindungen, Verfahren zu ihrer Herstellung und ihre Verwendung als Farbstoffe

Die Erfindung liegt auf dem technischen Gebiet der faserreaktiven Phthalocyaninfarbstoffe.

In den US-Patentschriften Nrs. 3 268 548 und 4 576 755 sind in den Beispielen faserreaktive, am Phthalocyaninrest sulfo- und sulfonamidgruppen-substituierte Phthalocyaninfarbstoffe beschrieben, deren Sulfonamidrest(e) - gegebenenfalls über ein zusätzliches Brückenglied - einen β-Sulfatoethylsulfonyl- oder Vinylsulfonyl-substituierten Phenyl- oder Naphthylrest gebunden enthalten. Farbstoffe ähnlicher Konstitution sind aus der US-Patentschrift Nr. 3 409 633 bekannt, die jedoch keine Sulfogruppe am Phthalocyaninkern enthalten. Desweiteren sind mit den Beispielen der US-PS 4 350 632 faserreaktive Phthalocyaninfarbstoffe ähnlichen chemischen Aufbaus beschrieben, die aufgrund einer oder mehrerer Sulfonylcyanamidgruppen eine verbesserte Löslichkeit als die anfangs erwähnten Phthalocyaninfarbstoffe besitzen.

Alle diese bekannten Phthalocyaninfarbstoffe sind für das Färben und Bedrucken von Cellulosefasern nach den für faserreaktive Farbstoffe gebräuchlichen Applikations- und Fixierverfahren im allgemeinen gut geeignet. Für spezielle Verfahren, beispielsweise für das neuerdings im Textildruck in zunehmendem Maße verwendete energiesparende kontinuierliche Zweiphasen-Kaltverweil-Verfahren, weisen sie jedoch gewisse Nachteile auf; so ist ihre Fixiergeschwindigkeit für die bei diesem Verfahren angestrebten möglichst kurzen Verweilzeiten bei Raumtemperatur zu gering oder sie ergeben auf regenerierten Cellulosefasern relativ farbschwache und trübe Drucke.

Mit der vorliegenden Erfindung wurden nunmehr neue Phthalocyaninverbindungen gefunden, die außer sehr guten färberischen Eigenschaften auch eine für das erwähnte Druckverfahren optimale Fixiergeschwindigkeit besitzen und auf Baumwolle und Zellwolle Drucke gleicher Qualität liefern.

Die erfindungsgemäßen Phthalocyaninverbindungen entsprechen der allgemeinen Formel (1)

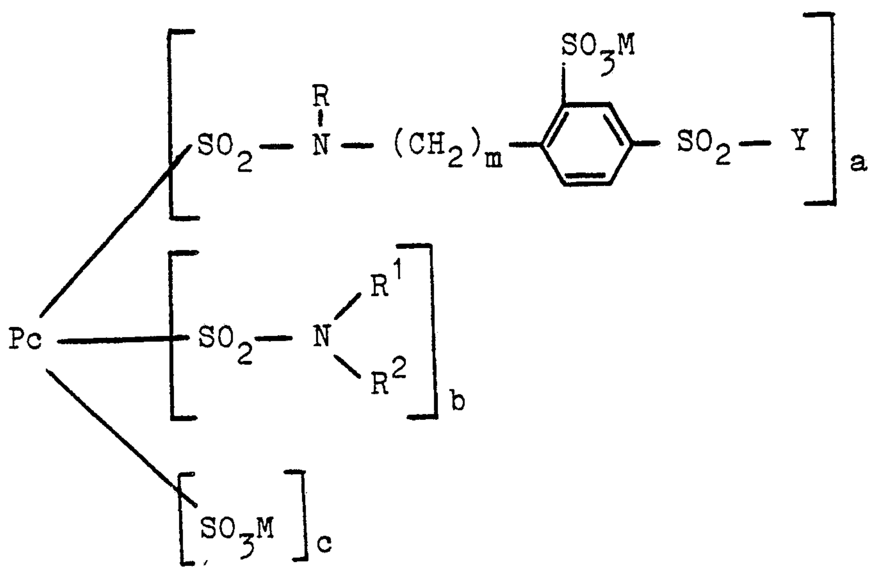

(1)

worin bedeuten:

Pc ist der Rest des Kupfer- oder Nickelphthalocyanins, dessen Benzolkerne durch Chlor oder Phenyl substituiert sein können;

R ist ein Wasserstoffatom oder eine Alkylgruppe von 1 bis 4 C-Atomen, die durch eine Hydroxy-, Sulfato-, Cyan- oder Sulfogruppe substituiert sein kann, wie beispielsweise die Methyl-, Ethyl-, β-Hydroxyethyl-, β-Sulfatoethyl-, β-Cyanoethyl- und β-Carboxyethyl-Gruppe;

M ist ein Wasserstoffatom oder das Äquivalent eines salzbildenden Metalls, wie eines Erdalkalimetalls, wie des Calciums oder bevorzugt ein Alkalimetall, wie Natrium, Kalium oder Lithium;

Y ist die Vinylgruppe oder bevorzugt die β-SulfatoethylGruppe;

$R^1$ ist ein Wasserstoffatom oder eine Alkylgruppe von 1 bis 4 C-Atomen, die substituiert sein kann, beispielsweise durch eine Cyan-, Carboxy- oder Sulfatogruppe, und

$R^2$ hat eine der Bedeutungen von $R^1$ und ist zu $R^1$ gleich oder von $R^1$ verschieden oder

$-NR^1R^2$ bilden zusammen eine Gruppe der Formel (2)

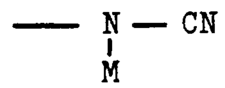

(2)

mit M der obengenannten Bedeutung;

m ist die Zahl 1, 2, 3 oder 4;

a ist eine ganze oder gebrochene Zahl von 1 bis 4,

b ist eine ganze oder gebrochene Zahl von Null bis 3 und

c ist eine ganze oder gebrochene Zahl von Null bis 3,

mit der Maßgabe, daß die Summe von (a + b + c) eine ganze oder gebrochene Zahl von 2 bis 4 ist; die Sulfonamid- und Sulfogruppen sind an die carbocyclischen aromatischen Ringe des Phthalocyanins jeweils in 3- und/oder 4-Stellung gebunden.

In den vorstehenden und nachstehenden Angaben bedeutet eine Sulfogruppe eine Gruppe entsprechend der allgemeinen Formel $-SO_3M$ , eine Carboxygruppe eine Gruppe der allgemeinen Formel -COOM und eine Sulfatogruppe eine Gruppe der allgemeinen Formel $-OSO_3M$ , in welchen M eine der oben angegebenen Bedeutungen besitzt.

Die erfindungsgemäßen Phthalocyaninverbindungen können in Form ihrer freien Säure und in Form ihrer Salze, bevorzugt Alkalimetallsalze, vorliegen. Sie finden bevorzugt in Form dieser Salze ihre Verwendung zum Färben oder Bedrucken von hydroxy- und/oder carbonamidgruppenhaltigem Material, insbesondere Fasermaterial.

Bedingt durch ihre Synthese sind die erfindungsgemäßen Phthalocyaninverbindungen nur in Ausnahmefällen einheitliche Verbindungen, bei denen die Indices a, b und c ganze Zahlen darstellen. In den meisten Fällen jedoch liegen sie als Mischungen von Verbindungen der Formel (1) vor, so daß die Indices a, b und c Durchschnittswerte sind und demgemäß gebrochene Zahlen darstellen. Die einzelnen Mischungsbestandteile, d.h. die erfindungsgemäßen Phthalocyaninverbindungen, sind aber stets Verbindungen mit ganzzahligen Indices.

Bevorzugte erfindungsgemäße Phthalocyaninverbindungen entsprechend der allgemeinen Formel (1) sind solche entsprechend der allgemeinen Formel (3)

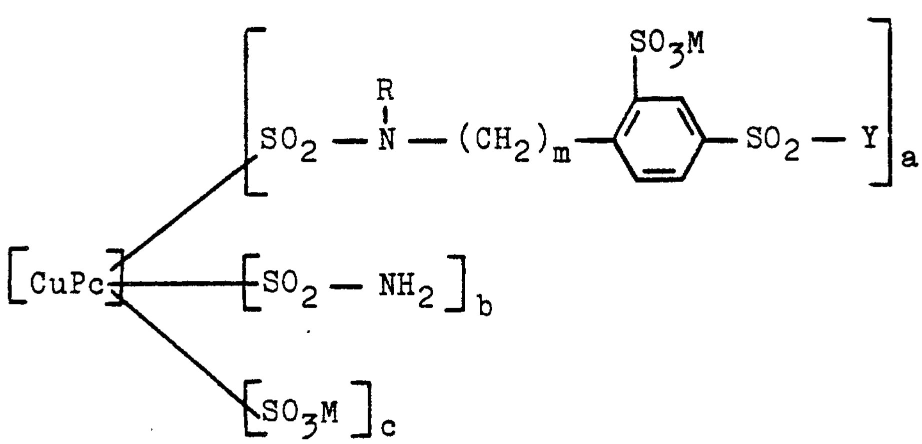

(3)

in welcher CuPc den Rest des Kupferphthalocyanins bedeutet, an dessen carbocyclischen aromatischen Ringen die Sulfo- und Sulfonamidgruppen jeweils in 3- und/oder 4-Stellung gebunden sind, Y, R, M und m eine der obengenannten, insbesondere bevorzugten Bedeutungen haben und die Indices a, b und c wie oben definiert sind, bevorzugt die Bedeutung von einer der nachfolgenden Gruppierungen (3a) bis (3e) besitzen, wobei deren Summe eine Zahl von 2 bis 4 ist:

(3a): a = 3, b = 0, c = 0 ;

(3b): a = 2, b = 0, c = 0 ;

(3c): a = 2, b = 0, c = 1 ;

(3d): a = 2, b = 1, c = 1 ;

(3e): a = 3, b = 1, c = 0 .

Bevorzugt sind insbesondere Verbindungen der allgemeinen Formel (3), in welcher R gleich Wasserstoff, m die Zahl 2, Y gleich β-Sulfatoethyl und a eine Zahl zwischen 2,1 und 2,4, vorzugsweise die Zahl 2,2, oder die Zahl 3 ist sowie b und c beide die Bedeutung von Null haben.

Die vorliegende Erfindung betrifft weiterhin ein Verfahren zur Herstellung der erfindungsgemäßen Verbindungen der allgemeinen Formel (1), das dadurch gekennzeichnet ist, daß man ein Phthalocyaninsulfochlorid der allgemeinen Formel (4)

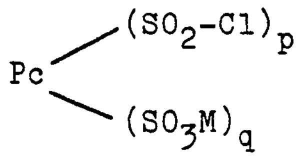

(4)

in welcher
Pc und M die obengenannten Bedeutungen haben, wobei M bevorzugt ein Wasserstoffatom ist,
p eine ganze oder gebrochene Zahl von 2 bis 4 bedeutet und
q für eine ganze oder gebrochene Zahl von Null bis 2 steht,
wobei die Summe von (p + q) eine ganze oder gebrochene Zahl von 2 bis 4 ist,
mit einer Aminoverbindung der allgemeinen Formel (5)

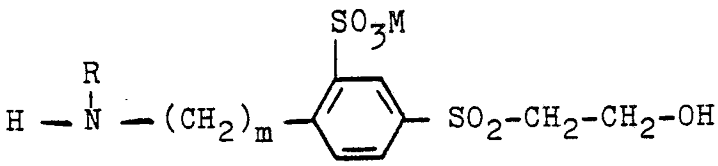

(5)

in welcher R, M und m die obengenannten Bedeutungen haben, und gegebenenfalls mit einer weiteren Aminoverbindung der allgemeinen Formel $HNR^1R^2$ mit $R^1$ und $R^2$ der obengenannten Bedeutung bzw. mit Cyanamid, falls in Formel (1) die Gruppe $-NR^1R^2$ für den Rest der Formel (2) steht, gleichzeitig oder in beliebiger Reihenfolge umsetzt und die erhaltene Phthalocyaninverbindung der allgemeinen Formel (6)

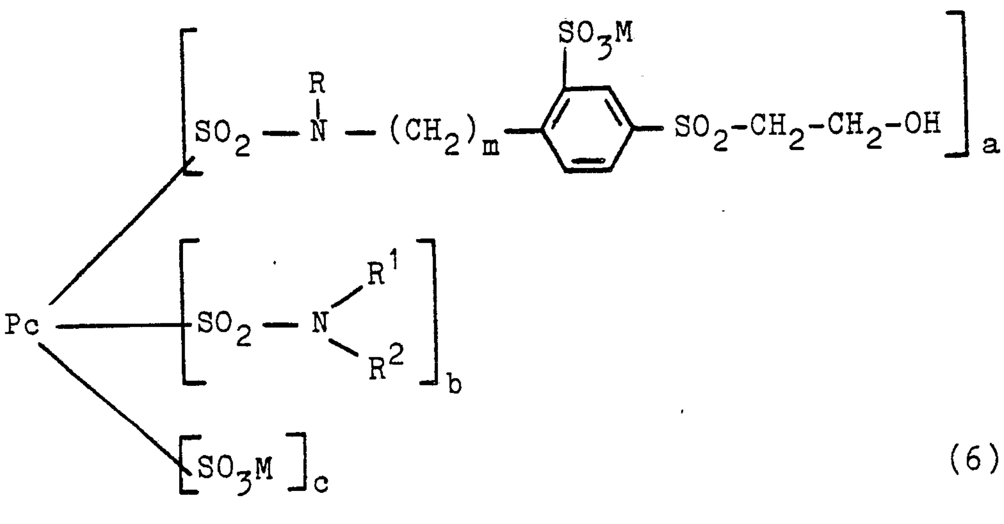

(6)

in welcher Pc, M, m, R, $R^1$, $R^2$, a und b die obengenannten Bedeutungen haben, mittels eines Sulfatisierungsmittels in die Sulfatoverbindung der allgemeinen Formel (1) mit Y gleich der $\beta$-Sulfatoethyl-Gruppe und diese gewünschtenfalls durch Behandlung in wäßrig-alkalischer Lösung bei einem pH-Wert zwischen 9 und 13 und einer Temperatur zwischen 0 und 40 °C in die Phthalocyaninverbindung der allgemeinen Formel (1) mit Y der Vinylgruppe überführt.

Die Umsetzung der Phthalocyaninsulfochloride der allgemeinen Formel (4) mit der Aminoverbindung der allgemeinen Formel (5) und gegebenenfalls der Aminoverbindung der Formel $HNR^1R^2$ bzw. Cyanamid erfolgt analog den bekannten Verfahrensweisen zur Synthese von sulfonamidgruppenhaltigen, gegebenenfalls sulfogruppenhaltigen Phthalocyaninverbindungen. Solche Verfahrensweisen sind beispielsweise in den bereits erwähnten US-Patentschriften Nrs. 3 268 548, 3 409 633 und 4 350 632 sowie in der britischen Patentschrift Nr. 2 021 837 und in der dort erwähnten Literatur beschrieben. So erfolgt die Umsetzung

bevorzugt in wäßrigem Medium bei einem pH-Wert zwischen 3,5 und 13, insbesondere bevorzugt bei einem pH-Wert von 9 bis 10, in Gegenwart eines säurebindenden Mittels, wie eines Alkali- oder Erdalkalihydroxids oder eines alkalisch reagierenden Alkalimetall- oder Erdalkalimetallsalzes von anorganischen oder organischen Säuren, wie Natriumcarbonat und sekundäres oder tertiäres Natriumphosphat, bei einer Temperatur zwischen 0 und 80° C, vorzugsweise zwischen 0 und 40° C. Die Umsetzung kann auch in einem wäßrig-organischen Medium durchgeführt werden, wobei das organische Medium zur Verbesserung der Löslichkeit der Reaktionskomponenten im wäßrigen Reaktionsmedium dienen kann; die organische Lösemittelkomponente ist bevorzugt ein Amid einer aliphatischen Carbonsäure, wie Dimethylformamid oder N-Methyl-pyrrolidon.

Zur Beschleunigung der Reaktion führt man die Umsetzung vorteilhaft in Gegenwart einer tertiären organischen Base durch, wie beispielsweise Pyridin oder Derivate des Pyridins, wie 3-Methyl-pyridin, Nicotinsäure oder Nicotinsäureamid.

Abhängig von den Reaktionsbedingungen können mehr oder weniger große Anteile der Sulfonsäurechloridgruppen in den Ausgangsverbindungen der allgemeinen Formel (4) oder deren bereits bestehenden Kondensations-Zwischenprodukte zu Sulfogruppen hydrolysiert werden; die Hydrolyse der Sulfonsäurechloridgruppen zu Sulfogruppen kann gleichzeitig mit der Umsetzung der Aminoverbindungen (einschließlich des Cyanamids) oder nach der Umsetzung der Sulfonsäurechloridgruppen mit den Aminoverbindungen erfolgen bzw. durchgeführt werden. Eventuell mit den Aminoverbindungen nicht umgesetzte Sulfonsäurechloridgruppen können anschließend bevorzugt in saurem bis schwach alkalischem Medium, so bei einem pH-Wert zwischen 1 und 8, und beispielsweise bei einer Temperatur zwischen 20 und 60° C hydrolysiert werden.

Die erfindungsgemäße Umsetzung der β-Hydroxyethylsulfonylsubstituierten Phthalocyaninverbindungen der allgemeinen Formel (6) zu deren erfindungsgemäßen β-Sulfatoethylsulfonyl-Verbindungen erfolgt ebenfalls analog den in der genannten Literatur beschriebenen Verfahrensweisen, wie beispielsweise mittels 96 bis 100%iger Schwefelsäure oder Schwefeltrioxid enthaltender Schwefelsäure, wie bis zu 35 %igem Oleum, bei einer Temperatur zwischen 0 und 60° C. Auch andere in der Literatur beschriebene Sulfatisierungsmittel sind hierfür geeignet, wie beispielsweise Chlorsulfonsäure und Amidosulfonsäure.

Bei diesen Sulfatisierungsreaktionen können abhängig von den gewählten Veresterungsbedingungen im Falle, daß die Gruppe $-NR^1R^2$ für eine Gruppe der Formel (2) steht, Nebenreaktionen in der Weise auftreten, daß ein geringer Anteil der Sulfonylcyanamidgruppen beispielsweise in Sulfonylharnstoffgruppen übergeführt oder weiter abgewandelt wird. Durch diese Nebenreaktionen wird jedoch die Qualität der erfindungsgemäßen Phthalocyaninverbindungen entsprechend der allgemeinen Formel (1) nicht beeinträchtigt.

Die Ausgangsverbindungen der allgemeinen Formel (4) sind bekannt und zahlreich in der Literatur beschrieben, wie bspw. in der bereits erwähnten britischen Patentanmeldungs-Veröffentlichung Nr. 2 024 837A. Die Aminoverbindungen der allgemeinen Formel (5) sind auf üblichem Wege durch Sulfierung der entsprechenden sulfogruppenfreien Verbindungen bzw. ihrer Acetylderivate herstellbar.

Die Abscheidung und Isolierung der erfindungsgemäß hergestellten Verbindungen (1) aus den Syntheseansätzen erfolgt nach allgemein bekannten Methoden entweder durch Ausfällen aus dem Reaktionsmedium mittels Elektrolyten, wie beispielsweise Natriumchlorid oder Kaliumchlorid, und anschließende Filtration oder durch Eindampfen der Reaktionslösung, beispielsweise durch Sprühtrocknung; hierbei kann der Reaktionslösung eine Puffersubstanz zugefügt werden.

Die erfindungsgemäßen Verbindungen der allgemeinen Formel (1), nachstehend Verbindungen (1) genannt, haben faserreaktive Eigenschaften und besitzen sehr gute Farbstoffeigenschaften. Sie können deshalb zum Färben von hydroxy- und/oder carbonamidgruppenhaltigem Material, insbesondere Fasermaterial, wie auch von Leder, verwendet werden. Ebenso können die bei der Synthese der erfindungsgemäßen Verbindungen anfallenden Lösungen, gegebenenfalls nach Zusatz einer Puffersubstanz, gegebenenfalls nach Konzentrierung oder teilweiser Entsalzung, direkt als Flüssigpräparationen der färberischen Verwendung zugeführt werden.

Gegenstand der vorliegenden Erfindung ist deshalb auch die Verwendung der erfindungsgemäßen Verbindungen der allgemeinen Formel (1) zum Färben von hydroxy- und/oder carbonamidgruppenhaltigen Materialien bzw. Verfahren zu deren Anwendung auf diesen Substraten. Eingeschlossen sind hierbei die Massefärbung, beispielsweise von Folien aus Polyamid, und die Färbung durch Bedrucken. Bevorzugt kommen die Materialien in Form von Fasermaterialien zur Anwendung, insbesondere in Form von Textilfasern, wie Garnen, Wickelkörpern und Geweben. Hydroxygruppenhaltige Materialien sind natürliche oder synthetische hydroxygruppenhaltige Materialien, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern, regenerierte Cellulosefasern sind

beispielsweise Zellwolle und Viskosekunstseide.

Carbonamidgruppenhaltige Materialien sind beispielsweise synthetische und natürliche Polyamide und Polyurethane, insbesondere in Form der Fasern, beispielsweise Wolle und andere Tierhaare, Seide, Leder, Polyamid-6,6, Polyamid-6, Polyamid-11 und Polyamid-4.

Die erfindungsgemäßen Verbindungen lassen sich auf den genannten Substraten, insbesondere auf den genannten Fasermaterialien, nach den für wasserlösliche Farbstoffe, insbesondere für faserreaktive Farbstoffe, bekannten Anwendungstechniken applizieren und fixieren, wie beispielsweise nach den üblichen Auszieh- und Klotzverfahren als auch in den üblichen Druckverfahren. Solche Verfahrensweisen sind in der Literatur, einschließlich der Patentliteratur, wie beispielsweise der oben erwähnten GB-A-2 024 837 oder der europäischen Patentanmeldungs-Veröffentlichung Nr. 0 218 131 A1 beschrieben.

Besonders vorteilhaft können die erfindungsgemäßen Phthalocyaninverbindungen in die üblichen Klotz-Dämpf-, Klotz-Kaltverweil- und Klotz-Thermofixier-Verfahren eingesetzt werden, da sie eine hohe Fixiergeschwindigkeit besitzen und in relativ kurzer Zeit auf dem Material, wie Fasermaterial fixiert werden. Insbesondere zeigen sie in den kontinuierlichen Zweiphasen-Kaltverweil-Verfahren, und hier insbesondere bei der Anwendung im Druck, Vorteile gegenüber den bekannten Phthalocyaninverbindungen wegen ihrer deutlich besseren Fixiergeschwindigkeit.

Die neuen Phthalocyaninverbindungen liefern nach den erwähnten Färbe- und Druckverfahren wertvolle türkisblaue Färbungen und Drucke, die sich durch sehr gute Echtheiten, vor allem durch sehr gute Licht- und Naßechtheiten, wie beispielsweise Wasch-, Schweiß-, Säure- und Alkaliechtheiten, auszeichnen.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in den Beispielen formelmäßig beschriebenen Verbindungen sind in Form der freien Säuren geschrieben; im allgemeinen werden sie in Form ihrer Alkalimetallsalze hergestellt und isoliert und in Form dieser Salze zum Färben verwendet. Ebenso können die in den Beispielen, insbesondere Tabellenbeispielen, in Form der freien Säuren genannten Ausgangsverbindungen und Komponenten als solche oder in Form ihrer Salze, vorzugsweise Alkalimetallsalze, wie Natrium- oder Kaliumsalze, in die Synthese eingesetzt werden.

Die in den Beispielen für die erfindungsgemäßen Phthalocyaninverbindungen genannten Absorptionsmaxima ($\lambda_{max}$-Werte) im sichtbaren Bereich wurden für deren Alkalisalze aus wäßriger Lösung ermittelt.

Beispiel 1

105 Teile 2-(2-Aminoethyl)-5-(2-hydroxyethylsulfonyl)-benzol-sulfonsäure (s. nachfolgendes Beispiel A) werden mit 170 Teilen Wasser verrührt. Anschließend gibt man 87 Teile Kupferphthalocyanin-3-trisulfochlorid in Form eines feuchten Filterkuchens unter Rühren hinzu, stellt mit Natronlauge einen pH-Wert von 10 ein, erwärmt den Ansatz auf 50°C und führt die Umsetzung unter Rühren noch etwa 8 Stunden bei 50°C unter Einhaltung des pH-Wertes von 10 bis zur Beendigung der Umsetzung weiter. Anschließend wird der Ansatz mit Schwefelsäure auf einen pH von 7,0 gestellt und die Syntheselösung durch Sprühtrocknung eingedampft.

Das trockne Kondensationsprodukt wird unterhalb von 50°C langsam in eine Mischung aus 667 Teilen 100%igen Schwefelsäure und 134 Teilen 20%igem Oleum (= 800 Teilen 3,5%igem Oleum) eingetragen und bis zur vollständigen Lösung bei 50°C verrührt und sodann in ein Gemisch aus Eis und einer wäßrigen Kaliumchloridlösung eingerührt. Das ausgefallene Produkt wird abgesaugt und mit einer wäßrigen Kaliumchloridlösung gewaschen. Der feuchte Rückstand wird anschlieBend unter Einstellung eines pH-Wertes von 5 mittels Natriumhydrogencarbonat in Wasser eingerührt, die erhaltene Lösung in üblicher Weise geklärt und sprühgetrocknet.

Man erhält ein dunkelblaues, elektrolytsalzhaltiges (wie Kalium- und Natriumchlorid-haltiges) Pulver des Alkalimetallsalzes, vorwiegend Natriumsalzes, einer Verbindung entsprechend der Formel

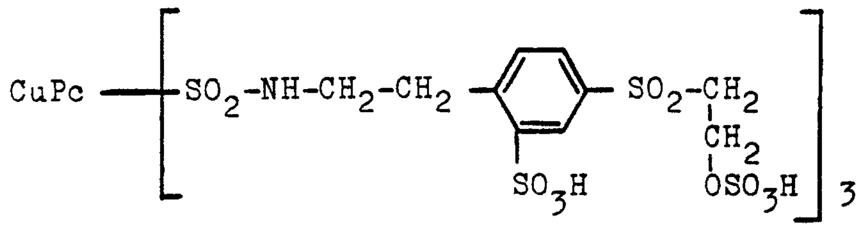

$(\lambda_{max} = 664\ nm)$.

Die erfindungsgemäße Verbindung zeigt sehr gute faserreaktive Farbstoffeigenschaften und liefert nach den für faserreaktive Farbstoffe üblichen Applikations- und Fixiermethoden, einschließlich in vorteilhafter Weise nach den Anwendungsmethoden, die für schnellfixierende faserreaktive Farbstoffe üblich sind, türkisblaue Färbungen und Drucke mit sehr guten Echtheitseigenschaften, wie insbesondere sehr guten Licht- und Naßechtheiten, von denen die Wasch-, Schweiß-, Säure- und Alkaliechtheiten besonders hervorgehoben werden können.

Beispiel A

Die Ausgangsverbindung 2-(2-Aminoethyl)-5-(2-hydroxyethylsulfonyl)-benzol-sulfonsäure kann wie folgt hergestellt werden: [4-(2-Acetylaminoethyl)]-(2-hydroxyethylsulfonyl)-benzol, beschrieben in US-PS 3 268 548, wird mit 40 %igem Oleum bei 70°C während 5 Stunden sulfiert. Anschließend wird der Ansatz mit Wasser verdünnt, und die Acetylaminogruppe wird durch vierstündiges Kochen dieser sauren Lösung hydrolysiert. Beim Abkühlen scheidet sich die gewünschte Verbindung aus. Sie wird abfiltriert, gewaschen und getrocknet.

Analyse (bezogen auf $C_{10}H_{15}NO_6S_2$; MG = 309):
ber.: C 38,83%, H 4,85%, N 4,53%, S 20,71%;
gef.: C 38,5 %, H 5,2 %, N 4,4 %, S 20,6 %.
Schmelzpunkt: 313 - 316°C (unter Zersetzung).

Beispiel 2

62 Teile 2-(2-Aminoethyl)-5-(2-hydroxyethylsulfonyl)-benzol-sulfonsäure werden in 500 Teilen Wasser unter Zugabe von 41 Volumenteilen einer 16,5 %igen wäßrigen Natronlauge gelöst. 30 Volumenteile einer 25 %igen wäßrigen Ammoniaklösung werden hinzugegeben und anschließend sofort 97 Teile Kupferphthalocyanin-3-tetrasulfochlorid in Form eines feuchten Filterkuchens. Das Reaktionsgemisch wird mit Natronlauge auf einen pH-Wert von 12 gestellt und unter Rühren, weiterhin bei Raumtemperatur, durch fortlaufende Zugabe von Natronlauge bei diesem pH-Wert gehalten. Die Reaktion ist beendet, wenn kein Alkali mehr verbraucht wird. Sodann gibt man 70 Teile Natriumsulfat hinzu und säuert den Reaktionsansatz mit Schwefelsäure an. Das ausfallende Produkt wird abfiltriert und getrocknet.

Es wird sodann in 210 Volumenteile Schwefelsäure (Monohydrat) eingetragen. Die Mischung wird 2 Stunden bei 50°C gerührt und sodann in eine Mischung von 1000 Volumenteilen einer gesättigten wäßrigen Natriumchlorid-Lösung und 1000 Teilen Eis unter Rühren einlaufen lassen, wobei die Temperatur 10°C nicht überschreiten soll. Das ausgefallene Produkt wird abfiltriert und mit einer gesättigten wäßrigen Natriumchlorid-Lösung gewaschen. Der feuchte Rückstand wird in 500 Teilen Wasser mittels Natriumhydrogencarbonat bei einem pH-Wert von 5 bis 6 gelöst, und die Lösung wird anschließend sprühgetrocknet.

Man erhält ein dunkelblaues, elektrolythaltiges Pulver des Natriumsalzes eines Verbindungsgemisches entsprechend der Formel

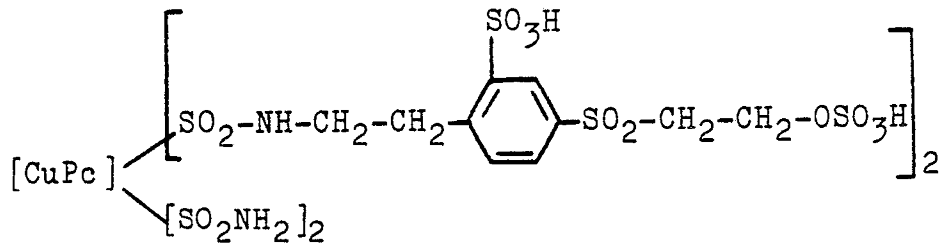

($\lambda_{max}$ = 612 nm)

das sehr gute faserreaktive Farbstoffeigenschaften besitzt und nach den für faserreaktive Farbstoffe üblichen Applikations- und Fixiermethoden türkisblaue Färbungen und Drucke mit ähnlich guten Eigenschaften, wie für die erfindungsgemäße Kupferphthalocyaninverbindung des Beispieles 1 beschrieben, liefert.

## Beispiele 3 bis 32

In den nachfolgenden Tabellenbeispielen sind weitere erfindungsgemäße Verbindungen mit Hilfe der allgemeinen Formel (1) beschrieben. Sie lassen sich in erfindungsgemäßer Weise, beispielsweise nach einem der obigen Ausführungsbeispiele, mittels der aus dem jeweiligen Tabellenbeispiel ersichtlichen Aminkomponente(n) und einem gegebenenfalls bereits Sulfogruppen enthaltenden Phthalocyaninsulfochlorid entsprechend der allgemeinen Formel (4), wie einem in dem jeweiligen Tabellenbeispiel angezeigten Phthalocyaninsulfochlorid, herstellen. Sie besitzen sehr gute faserreaktive Farbstoffeigenschaften und liefern auf den in der Beschreibung genannten Materialien, insbesondere auf Cellulosefasermaterialien, nach den für faserreaktive Farbstoffe üblichen Applikations- und Fixiermethoden farbstarke echte Färbungen und Drucke in dem in dem jeweiligen Tabellenbeispiel für Färbungen auf Baumwolle angegebenen Farbton.

| Bsp. | Pc-sulfochlorid (3) | | Verbindung (1) | | | | | | | Farbton ($\lambda_{max}$) |
|---|---|---|---|---|---|---|---|---|---|---|
| | p | q | R | m | $R^1$ | $R^2$ | a | b | c | |
| 3 | 4 | 0 | Wasserstoff | 2 | - | - | 4 | 0 | 0 | türkisblau (666) |
| 4 | 3 | 0 | Wasserstoff | 2 | - | - | 2 | 0 | 1 | dito (665) |
| 5 | 2,2 | 0 | Wasserstoff | 2 | - | - | 1,5 | 0 | 0,7 | dito (621) |
| 6 | 2,2 | 0 | Wasserstoff | 2 | Wasserstoff | Cyano | 1,5 | 0,7 | 0 | dito (617) |
| 7 | 3 | 1 | Wasserstoff | 2 | - | - | 3 | 0 | 1 | dito (668) |
| 8 | 4 | 0 | Wasserstoff | 2 | - | - | 2,5 | 0 | 1,5 | dito (665) |
| 9 | 3 | 0 | Wasserstoff | 2 | - | - | 1,5 | 0 | 1,5 | dito (664) |
| 10 | 2 | 0 | Methyl | 1 | - | - | 2 | 0 | 0 | türkisblau |
| 11 | 2 | 0 | Wasserstoff | 1 | - | - | 2 | 0 | 0 | dito |
| 12 | 3 | 0 | Wasserstoff | 2 | Wasserstoff | Cyano | 1,5 | 1,5 | 0 | dito (662) |
| 13 | 4 | 0 | Wasserstoff | 2 | Wasserstoff | Cyano | 1,5 | 2,5 | 0 | dito (664) |
| 14 | 4 | 0 | Wasserstoff | 2 | Wasserstoff | Cyano | 2 | 2 | 0 | dito (668) |
| 15 | 3 | 0 | Wasserstoff | 2 | Wasserstoff | Cyano | 2 | 1 | 0 | dito (666) |
| 16 | 4 | 0 | Wasserstoff | 2 | - | - | 1,5 | 0 | 2,5 | dito (666) |
| 17 | 4 | 0 | Wasserstoff | 2 | Methyl | β-Sulfatoethyl | 2 | 2 | 0 | türkisblau |
| 18 | 2 | 0 | Wasserstoff | 2 | β-Sulfatoethyl | β-Sulfatoethyl | 1 | 1 | 0 | dito |
| 19 | 4 | 0 | Wasserstoff | 2 | Wasserstoff | Ethyl | 2 | 2 | 0 | dito |
| 20 | 4 | 0 | Wasserstoff | 2 | Wasserstoff | γ-Carboxypropyl | 2 | 1 | 1 | dito |
| 21 | 4 | 0 | Wasserstoff | 2 | Wasserstoff | β-Sulfoethyl | 2 | 2 | 0 | dito |

| Bsp. | Pc-sulfochlorid (3) | | Verbindung (1) | | | | | | | Farbton ($\lambda_{max}$) |
|---|---|---|---|---|---|---|---|---|---|---|
| | p | q | R | m | $R^1$ | $R^2$ | a | b | c | |
| 22 | 4 | 0 | Wasserstoff | 4 | - | - | 2 | 0 | 2 | türkisblau |
| 23 | 2 | 0 | Wasserstoff | 4 | - | - | 2 | 0 | 0 | dito |
| 24 | 2 | 0 | Ethyl | 4 | - | - | 2 | 0 | 0 | dito |
| 25 | 4 | 0 | Wasserstoff | 4 | Wasserstoff | β-Carboxyethyl | 2 | 2 | 0 | dito |
| 26 | 4 | 0 | Methyl | 2 | - | - | 2 | 0 | 2 | dito |
| 27 | 4 | 0 | Methyl | 2 | Methyl | β-Sulfatoethyl | 2 | 2 | 0 | dito |
| 28 | 4 | 0 | Methyl | 2 | Methyl | β-Sulfatoethyl | 2 | 1 | 1 | dito |
| 29 | 4 | 0 | Ethyl | 2 | - | - | 2 | 0 | 2 | dito |
| 30 | 4 | 0 | Ethyl | 2 | Methyl | γ-Sulfatopropyl | 2 | 2 | 0 | dito |
| 31 | 4 | 0 | Ethyl | 2 | Methyl | β-Sulfatoethyl | 2 | 1 | 1 | dito |
| 32 | 2,2 | 0 | Wasserstoff | 2 | - | - | 2,2 | 0 | 0 | dito (625) |

Anwendungsbeispiel

20 Teile der erfindungsgemäßen β-Sulfatoethylsulfonyl-Kupferphthalocyanin-Verbindung von Beispiel 1 werden zusammen mit 50 Teilen Harnstoff in 200 Teilen heißem Wasser gelöst. Dieser Lösung werden unter Rühren 500 Teile einer aus 40 Teilen eines handelsüblichen Alginatverdickers, 10 Teilen eines Polyphosphates, 50 Teilen eines handelsüblichen Emulgators und 900 Teilen Wasser bestehenden Verdikkung hinzugegeben. Die erhaltene Paste wird mit Wasser und weiterer Alginatverdickung auf 1000 Teile eingestellt.

Mit dieser Druckpaste wird ein Baumwollgewebe bedruckt. Der Druck wird bei etwa 60°C getrocknet und sodann mit einer wäßrigen Fixierlösung geklotzt, die in einem Liter 180 g wasserfreies Natriumsulfat, 50 g wasserfreies Kaliumcarbonat, 150 g wasserfreies Natriumcarbonat und 100 ml einer 33 %igen wäßrigen Natronlauge enthält Das geklotzte Gewebe wird nach einem Luftgang von 20 bis 40 Sek. abgelegt oder auf eine Docke gewickelt und nach einer Verweilzeit von 20 bis 30 Minuten bei einer Temperatur von 20°C durch Spülen mit kaltem und heißem Wasser, durch kochendes Seifen, durch erneutes Spülen mit heißem und kaltem Wasser und anschließendes Trocknen fertiggestellt. Man erhält mit Hilfe dieses Zweiphasen-Kaltverweil-Verfahrens ein kräftiges türkisblaues Druckmuster von guter Licht- und Waschechtheit.

Vergleichsbeispiel

Es wird der erfindungsgemäße β-Sulfatoethylsulfonyl-Kupferphthalocyanin-Farbstoff des Beispieles 1, nachfolgend als Farbstoff (A) bezeichnet, mit den bekannten Farbstoffen (B), (C) und (D) in den anwendungstechnischen Eigenschaften verglichen (in den Formeln bedeuten M jeweils ein Alkalimetall):

Farbstoff (B):

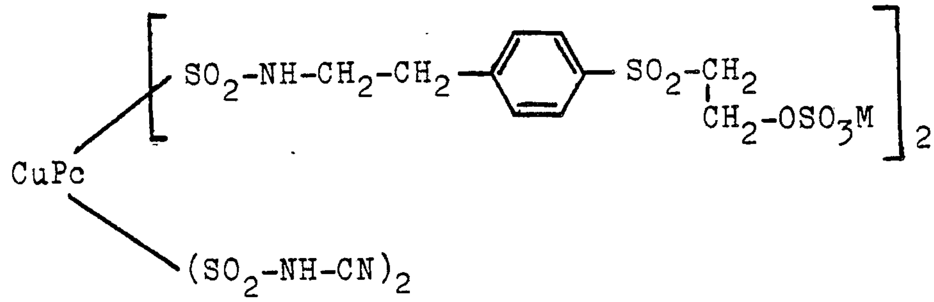

(US-PS 4 350 632, Beispiel 1)

Farbstoff (C):

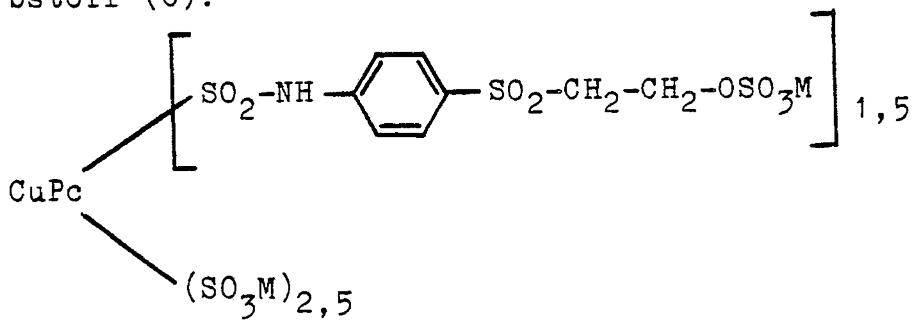

(US-PS 3 268 548, Beispiel 3)

Farbstoff (D):

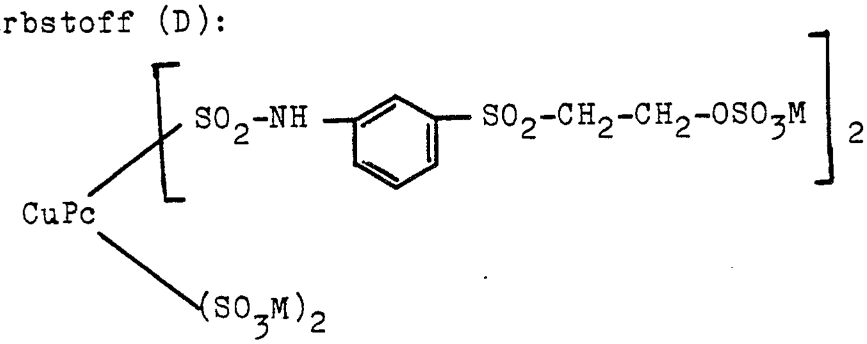

(US-PS 4 350 632, Beispiel 1)

a) Versuchsdurchführung:

Sowohl ein Gewebe aus mercerisierter Baumwolle als auch ein Gewebe aus Zellwolle wurden jeweils im Rouleaux-Druck mit einer wäßrigen, eine neutrale Alginatverdickung enthaltenden Druckpaste bedruckt, die jeweils in 1000 Teilen 50 Teile eines der Farbstoffe (A) bis (D) gelöst enthält. Das bedruckte und anschließend getrocknete Gewebe wurde sodann mit einer wäßrigen Fixierflotte, die in 1000 Volumenteilen 180 Teile wasserfreies Natriumsulfat, 150 Teile calciniertes Natriumcarbonat, 60 Teile wasserfreies Kaliumcarbonat und 100 ml einer 33%igen wäßrigen Natronlauge enthielt, bei 20° C mit einer Flottenaufnahme von

80 %, bezogen auf das Warengewicht des Gewebes, geklotzt. Das geklotzte Gewebe wurde anschließend nach einem Luftgang von 20 Sekunden abgelegt und in abgedecktem Zustande verschieden lange, und zwar 5 Minuten, 10 Minuten, 20 Minuten und 60 Minuten, verweilen lassen. Die Drucke wurden anschließend durch Spülen mit kaltem Wasser, durch Waschen mit einem ein neutrales Waschmittel enthaltenden wäßrigen Bad bei 60° C, durch nochmaliges Spülen mit kaltem Wasser und Trocknen fertiggestellt.

b) Auswertung:

Die in Abhängigkeit von der Verweilzeit erzielten Farbstärken der Drucke wurden in einem Spektralphotometer gemessen. Als Vergleich diente jeweils der nach dem Einphasen-Dämpf-Verfahren (Fixierung mittels Sattdampf von 102 bis 103° C während 4 Minuten des mit der Natriumbicarbonat-haltigen Druckpaste hergestellten Druckes) erhaltene Druck, dessen Farbstärke jeweils mit 100 % als Standard festgelegt wurde: relative Farbstärke (in %):

| a) auf Baumwolle: | | | | | |
|---|---|---|---|---|---|
| Farbstoff | Einphasen-Verf. | Zweiphasen-Verf.; Fixierzeit | | | |
| | | 5 min | 10 min | 20 min | 60 min |
| (A) | 100 | 101 | 107 | 110 | 110 |
| (B) | 100 | 79 | 84 | 90 | 91 |
| (C) | 100 | 29 | 43 | 65 | 75 |
| (D) | 100 | 22 | 31 | 47 | 66 |
| b) auf laugierter Zellwolle: | | | | | |
| (A) | 100 | 85 | 100 | 105 | 105 |
| (B) | 100 | 62 | 69 | 75 | 76 |
| (C) | 100 | 15 | 23 | 33 | 42 |
| (D) | 100 | 8 | 11 | 15 | 21 |

## Ansprüche

1. Eine Verbindung entsprechend der allgemeinen Formel (1)

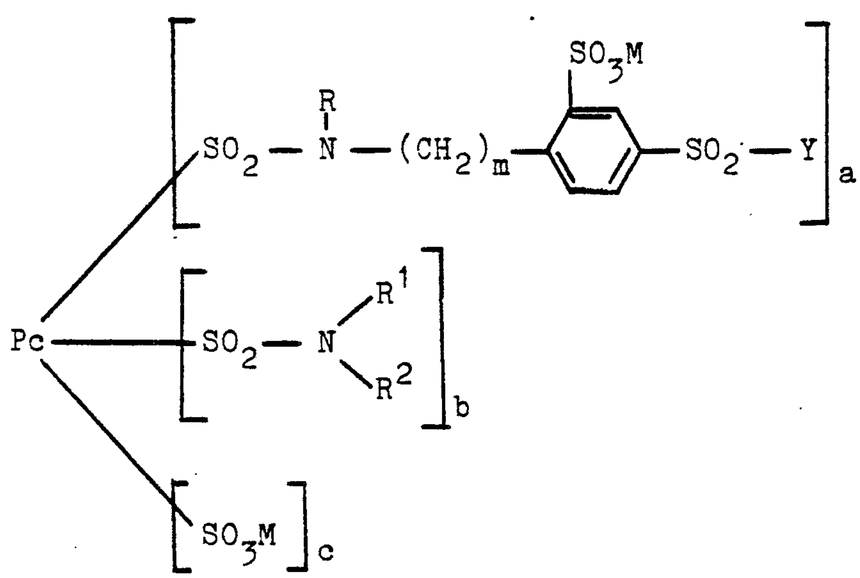

(1)

in welcher bedeuten:

Pc ist der Rest des Kupfer- oder Nickelphthalocyanins, dessen Benzolkerne durch Chlor oder Phenyl substituiert sein können;

R ist ein Wassserstoffatom oder eine Alkylgruppe von 1 bis 4 C-Atomen, die durch eine Hydroxy-, Sulfato-, Cyan- oder Sulfogruppe substituiert sein kann;

M ist ein Wasserstoffatom oder das Äquivalent eines salzbildenden Metalls, bevorzugt ein Wasserstoffatom oder ein Alkalimetall;

Y ist die Vinylgruppe oder bevorzugt die $\beta$-Sulfatoethyl-Gruppe;

$R^1$ ist ein Wasserstoffatom oder eine Alkylgruppe von 1 bis 4 C-Atomen, die substituiert sein kann, und

$R^2$ hat eine der Bedeutungen von $R^1$ und ist zu $R^1$ gleich oder von $R^1$ verschieden, oder

$-NR^1R^2$ bilden zusammen eine Gruppe der Formel (2)

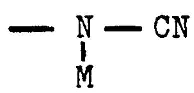

(2)

mit M der obengenannten Bedeutung;

m ist die Zahl 1, 2, 4 oder

a ist eine ganze oder gebrochene Zahl von 1 bis 4,

b ist eine ganze oder gebrochene Zahl von Null bis 3 und

c ist eine ganze oder gebrochene Zahl von Null bis 3,

mit der Maßgabe, daß die Summe von (a + b + c) eine ganze oder gebrochene Zahl von 2 bis 4 ist; die Sulfonamid- und Sulfogruppen sind an die carbocyclischen aromatischen Ringe des Phthalocyanins jeweils in 3- und/oder 4-Stellung gebunden.

2. Verbindung nach Anspruch 1 entsprechend der allgemeinen Formel (2)

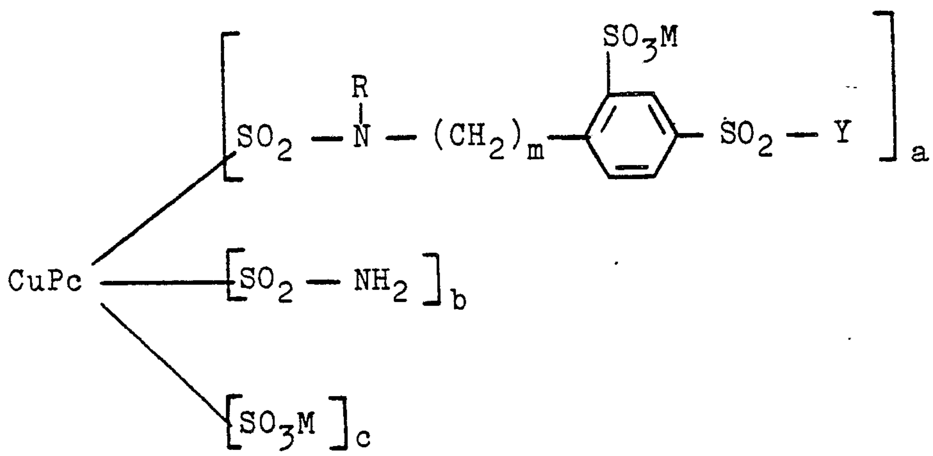

(3)

in welcher CuPc den Rest des Kupferphthalocyanins bedeutet, an dessen aromatisch-carbocyclische Ringe die Sulfonamid- und/oder Sulfogruppen in den 3- und/oder 4-Stellungen gebunden sind und Y, R, M, m, a, b und c die obengenannten Bedeutungen haben.

3. Verbindung nach Anspruch 2, dadurch gekennzeichnet, daß a die Zahl 3 ist, b die Zahl Null und c die Zahl Null ist.

4. Verbindung nach Anspruch 2, dadurch gekennzeichnet, daß a die Zahl 2, b die Zahl Null und c die Zahl Null ist.

5. Verbindung nach Anspruch 2, dadurch gekennzeichnet, daß a die Zahl 2, b die Zahl Null und c die Zahl 1 ist.

6. Verbindung nach Anspruch 2, dadurch gekennzeichnet, daß a die Zahl 2, b die Zahl 1 und c die Zahl 1 ist.

7. Verbindung nach Anspruch 2, dadurch gekennzeichnet, daß a die Zahl 3, b die Zahl 1 und c die Zahl Null ist.

8. Verbindung nach mindestens einem der Ansprüche 1 bis 7, dadurch gekennzeichnet, daß R ein Wasserstoffatom ist.

9 Verbindung nach mindestens einem der Ansprüche 1 bis 8, dadurch gekennzeichnet, daß m für die Zahl 2 steht.

10. Verbindung nach mindestens einem der Ansprüche 1 bis 9, dadurch gekennzeichnet, daß Y gleich eine $\beta$-SulfatoethylGruppe ist.

11. Verbindung nach Anspruch 2, dadurch gekennzeichnet, daß R gleich Wasserstoff, m gleich 2, Y gleich $\beta$-Sulfatoethyl, a gleich 3, b gleich Null und c gleich Null ist.

12. Verbindung nach Anspruch 2, dadurch gekennzeichnet, daß R gleich Wasserstoff, m gleich 2, Y gleich $\beta$-Sulfatoethyl, a gleich einer Zahl zwischen 2,1 und 2,4, vorzugsweise die Zahl 2,2 ist und b und c beide Null bedeuten.

13. Verfahren zur Herstellung einer Verbindung entsprechend der in Anspruch 1 genannten und definierten allgemeinen Formel (1), dadurch gekennzeichnet, daß man eine Verbindung der allgemeinen Formel (4)

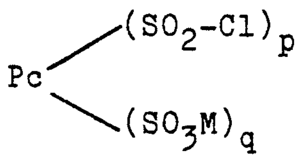

(4)

in welcher Pc die in Anspruch 1 genannte Bedeutung besitzt,
p eine ganze oder gebrochene Zahl von 2 bis 4 ist und
q für eine ganze oder gebrochene Zahl von Null bis 2 steht,
wobei die Summe von (p + q) eine ganze oder gebrochene Zahl von 2 bis 4 ist,
mit einer Aminoverbindung der allgemeinen Formel (5)

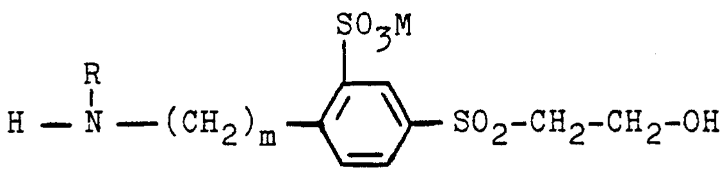

(5)

in welcher R, M und m die die in Anspruch 1 genannten Bedeutungen haben, und gewünschtenfalls mit einer Aminoverbindung der allgemeinen Formel $HNR^1R^2$ mit $R^1$ und $R^2$ der in in Anspruch 1 genannten Bedeutung bzw. mit Cyanamid unter gegebenenfalls gleichzeitiger oder nachträglicher Hydrolyse von Sulfochloridgruppen zu Sulfogruppen umsetzt und die erhaltene Phthalocyaninverbindung der allgemeinen Formel (6)

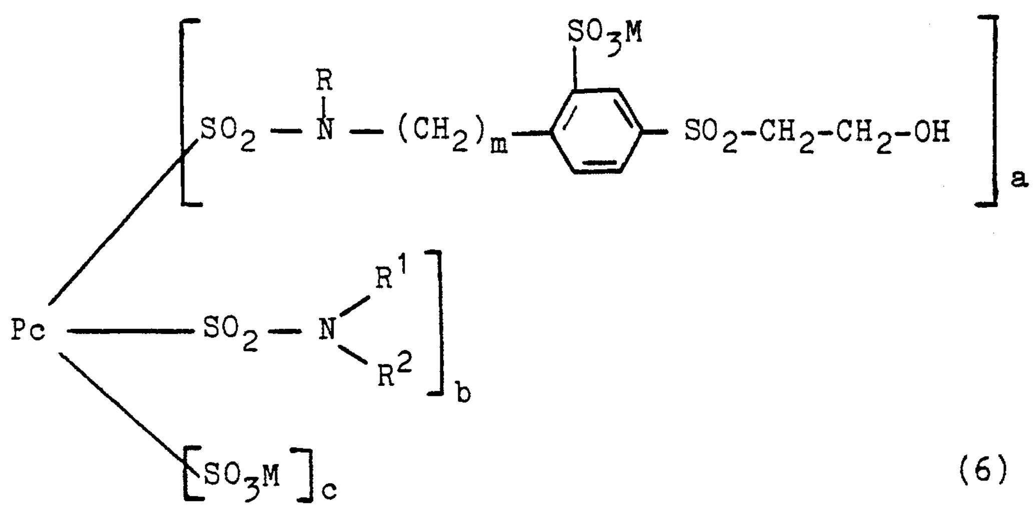

(6)

in welcher Pc, M, m, R, $R^1$, $R^2$, a, b und c die in Anspruch 1 genannten Bedeutungen haben, mit einem Sulfatisierungsmittel in die $\beta$-Sulfatoethylsulfonyl-Verbindung der allgemeinen Formel (1) und diese gewünschtenfalls durch Behandlung in einer wäßrig-alkalischen Lösung in die Vinylsulfonylverbindung der allgemeinen Formel (1) überführt.

14. Verwendung einer Verbindung von mindestens einem der Ansprüche 1 bis 12, zum Färben von hydroxy- und/oder carbonamidgruppenhaltigem Material, insbesondere Fasermaterial.

15. Verfahren zum Färben von hydroxy- und/oder carbonamidgruppenhaltigem Material, vorzugsweise Fasermaterial, bei welchem man einen Farbstoff auf das Material aufbringt und ihn mittels Wärme oder mit Hilfe eines säurebindenden Mittels oder mit Hilfe von Wärme und einem säurebindenden Mittel fixiert, dadurch gekennzeichnet, daß man als Farbstoff eine Phthalocyaninverbindung entsprechend mindestens einem der Ansprüche 1 bis 12 einsetzt.

Patentansprüche für folgenden Vertragsstaat : ES

1. Verfahren zur Herstellung einer Verbindung entsprechend der allgemeinen Formel (1)

der allgemeinen Formel (1)

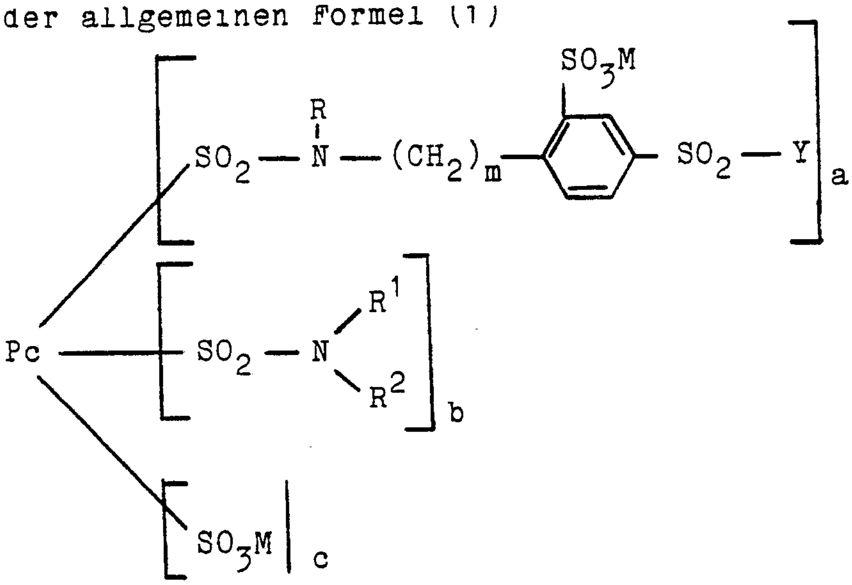

(1)

in welcher bedeuten:

Pc ist der Rest des Kupfer- oder Nickelphthalocyanins, dessen Benzolkerne durch Chlor oder Phenyl substituiert sein können;

R ist ein Wassserstoffatom oder eine Alkylgruppe von 1 bis 4 C-Atomen, die durch eine Hydroxy-, Sulfato-, Cyan- oder Sulfogruppe substituiert sein kann;

M ist ein Wasserstoffatom oder das Äquivalent eines salzbildenden Metalls,bevorzugt ein Wasserstoffatom oder ein Alkalimetall;

Y ist die Vinylgruppe oder bevorzugt die $\beta$-Sulfatoethyl-Gruppe;

$R^1$ ist ein Wasserstoffatom oder eine Alkylgruppe von 1 bis 4 C-Atomen, die substituiert sein kann, und

$R^2$ hat eine der Bedeutungen von $R^1$ und ist zu $R^1$ gleich oder von $R^1$ verschieden, oder

$-NR^1R^2$ bilden zusammen eine Gruppe der Formel (2)

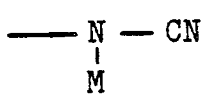

(2)

mit M der obengenannten Bedeutung; m ist die Zahl 1, 2, 3 oder 4;

a ist eine ganze oder gebrochene Zahl von 1 bis 4,

b ist eine ganze oder gebrochene Zahl von Null bis 3 und

c ist eine ganze oder gebrochene Zahl von Null bis 3,

mit der Maßgabe, daß die Summe von (a + b + c) eine ganze oder gebrochene Zahl von 2 bis 4 ist; die Sulfonamid- und Sulfogruppen sind an die carbocyclischen aromatischen Ringe des Phthalocyanins jeweils in 3- und/oder 4-Stellung gebunden,

dadurch gekennzeichnet, daß man eine Verbindung der allgemeinen Formel (4)

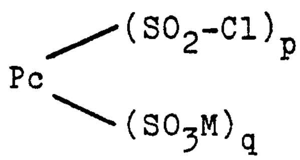

(4)

in welcher Pc die oben genannte Bedeutung besitzt,
p eine ganze oder gebrochene Zahl von 2 bis 4 ist und
q für eine ganze oder gebrochene Zahl von Null bis 2 steht,
wobei die Summe von (p + q) eine ganze oder gebrochene Zahl von 2 bis 4 ist,
mit einer Aminoverbindung der allgemeinen Formel (5)

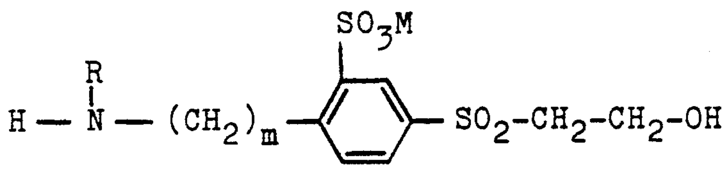

(5)

in welcher R, M und m die oben genannten Bedeutungen haben, und gewünschtenfalls mit einer Aminoverbindung der allgemeinen Formel $HNR^1R^2$ mit $R^1$ und $R^2$ der oben genannten Bedeutung bzw. mit Cyanamid unter gegebenenfalls gleichzeitiger oder nachträglicher Hydrolyse von Sulfochloridgruppen zu Sulfogruppen umsetzt und die erhaltene Phthalocyaninverbindung der allgemeinen Formel (6)

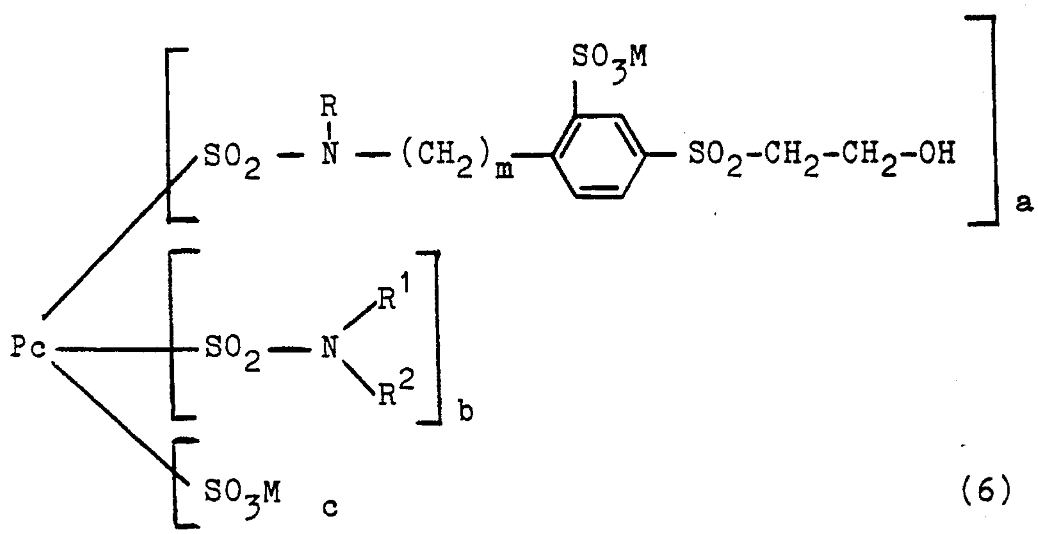

(6)

in welcher Pc, M, m, R, $R^1$, $R^2$, a, b und c die oben genannten Bedeutungen haben, mit einem Sulfatisierungsmittel in die β-SulfatoethylsulfonylVerbindung der allgemeinen Formel (1) und diese gewünschtenfalls durch Behandlung in einer wäßrig-alkalischen Lösung in die Vinylsulfonylverbindung der allgemeinen Formel (1) überführt.

2. Verfahren nach Anspruch 1, dadurch gekennzeichnet, daß die Verbindung der allgemeinen Formel (1) eine Verbindung entsprechend der allgemeinen Formel (2)

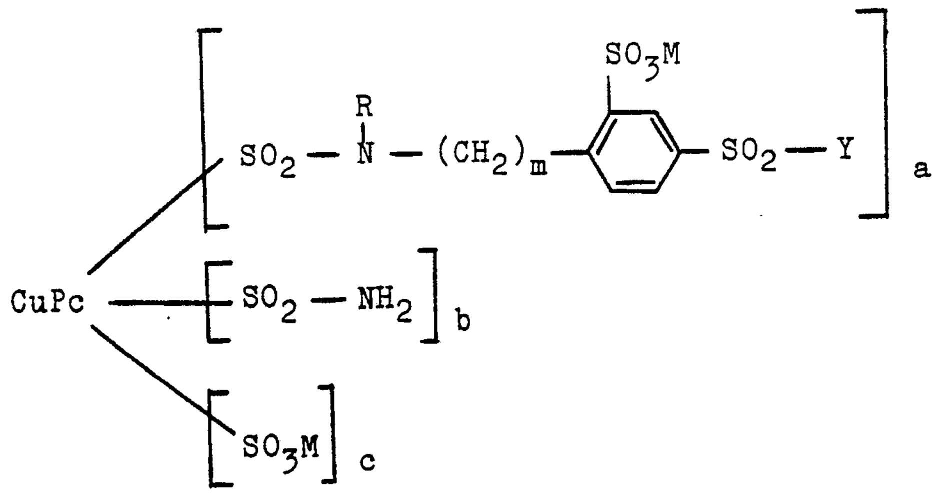

(3)

ist, in welcher CuPc den Rest des Kupferphthalocyanins bedeutet, an dessen aromatisch-carbocyclische Ringe die Sulfonamid- und/oder Sulfogruppen in den 3- und/oder 4-Stellungen gebunden sind und R, M, Y, m, a, b und c die obengenannten Bedeutungen haben.

3. Verfahren nach Anspruch 2, dadurch gekennzeichnet, daß a die Zahl 3 ist, b die Zahl Null und c die Zahl Null ist.

4. Verfahren nach Anspruch 2, dadurch gekennzeichnet, daß a die Zahl 2, b die Zahl Null und c die Zahl Null ist.

5. Verfahren nach Anspruch 2, dadurch gekennzeichnet, daß a die Zahl 2, b die Zahl Null und c die Zahl 1 ist.

6. Verfahren nach Anspruch 2, dadurch gekennzeichnet, daß a die Zahl 2, b die Zahl 1 und c die Zahl 1 ist.

7. Verfahren nach Anspruch 2, dadurch gekennzeichnet, daß a die Zahl 3, b die Zahl 1 und c die Zahl Null ist.

8. Verfahren nach mindestens einem der Ansprüche 1 bis 7, dadurch gekennzeichnet, daß R ein Wasserstoffatom ist.

9. Verfahren nach mindestens einem der Ansprüche 1 bis 8, dadurch gekennzeichnet, daß m für die Zahl 2 steht.

10. Verfahren nach mindestens einem der Ansprüche 1 bis 9, dadurch gekennzeichnet, daß Y gleich eine $\beta$-SulfatoethylGruppe ist.

11. Verfahren nach Anspruch 2, dadurch gekennzeichnet, daß R gleich Wasserstoff, m gleich 2, Y gleich $\beta$-Sulfatoethyl, a gleich 3, b gleich Null und c gleich Null ist.

12. Verfahren nach Anspruch 2, dadurch gekennzeichnet, daß R gleich Wasserstoff, m gleich 2, Y gleich $\beta$-Sulfatoethyl, a gleich einer Zahl zwischen 2,1 und 2,4, vorzugsweise die Zahl 2,2 ist und b und c beide Null bedeuten.

11. Verwendung einer Verbindung von mindestens einem der Ansprüche 1 bis 12, zum Färben von hydroxy- und/oder carbonamidgruppenhaltigem Material, insbesondere Fasermaterial.

14. Verfahren zum Färben von hydroxy- und/oder carbonamidgruppenhaltigem Material, vorzugsweise Fasermaterial, bei welchem man einen Farbstoff auf das Material aufbringt und ihn mittels Wärme oder mit Hilfe eines säurebindenden Mittels oder mit Hilfe von Wärme und einem säurebindenden Mittel fixiert, dadurch gekennzeichnet, daß man als Farbstoff eine Phthalocyaninverbindung entsprechend mindestens einem der Ansprüche 1 bis 12 einsetzt.

Europäisches Patentamt

# EUROPÄISCHER RECHERCHENBERICHT

Nummer der Anmeldung

EP 88 11 3201

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | CH-A- 473 881 (HOECHST) * Anspruch 1; Spalte 4, Zeilen 50-51; Beispiel 9 * | 1 | C 09 B 62/517<br>D 06 P 1/384 |
| A | EP-A-0 231 837 (HOECHST) * Anspruch 7; Seite 7, Zeile 5 * | 1 | |
| A | EP-A-0 043 561 (HOECHST) * Anspruch 1; Beispiel 34 *& US-A-4 350 632 (Kat. D) | 1 | |
| D,A | GB-A-2 024 837 (HOECHST) * Anspruch 6; Seite 4, Zeile 38 * | 1 | |
| | | | **RECHERCHIERTE SACHGEBIETE (Int. Cl.4)** |
| | | | C 09 B |

Der vorliegende Recherchenbericht wurde für alle Patentansprüche erstellt

| Recherchenort | Abschlußdatum der Recherche | Prüfer |
|---|---|---|
| DEN HAAG | 24-11-1988 | GINESTET M.E.J. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)